# EUROPEAN PATENT APPLICATION

(11) **EP 4 287 777 A1**
(43) Date of publication of application: **06.12.2023**
(21) Application number: 22745747.0
(22) Date of filing: 21.01.2022
(51) Int. Cl.: H05B 45/20, H05B 47/125, H05B 47/13, H05B 47/155, H05B 47/105

(54) **LIGHTING SYSTEM, CONTROL METHOD, AND PROGRAM**

(30) Priority: 29.01.2021 JP 2021014000
(71) Applicant: Panasonic Intellectual Property Management Co., Ltd., Kadoma-shi, Osaka 571-0057 (JP)
(72) Inventor: AKETA, Takanori, Kadoma-shi, Osaka 571-0057 (JP); TANAKA, Kenichiro, Kadoma-shi, Osaka 571-0057 (JP); YOSHIZAWA, Jin, Kadoma-shi, Osaka 571-0057 (JP); NAGATOMO, Shingo, Kadoma-shi, Osaka 571-0057 (JP); KITAMURA, Kazuki, Kadoma-shi, Osaka 571-0057 (JP); TAKAHASHI, Tatsuya, Kadoma-shi, Osaka 571-0057 (JP); KOGA, Tatsuo, Kadoma-shi, Osaka 571-0057 (JP); YAMADA, Tomonori, Kadoma-shi, Osaka 571-0057 (JP); URA, Kazuto, Kadoma-shi, Osaka 571-0057 (JP)
(74) Representative: Appelt, Christian W.
(86) International application number: PCT/JP2022/002194
(87) International publication number: WO 2022/163526

(57) **Abstract**

Provided are a lighting system, a control method, and a program, all of which make a lighting device usable for multiple purposes. A lighting system (10) includes a plurality of lighting devices (1) and a control device. The plurality of lighting devices (1) are installed in a facility (200). The control device controls the plurality of lighting devices (1). The control device controls lighting light projected by at least one lighting device (1), belonging to the plurality of lighting devices (1), into colored lighting light, of which a color is different from a color white, to give, upon acquiring information about an event in question, a sign depending on the event in question.

## Description

### Technical Field

The present disclosure generally relates to a lighting system, a control method, and a program. More particularly, the present disclosure relates to a lighting system including a plurality of lighting devices, a control method for controlling the plurality of lighting devices, and a program.

### Background Art

A lighting control system, including a plurality of lighting fixtures that lights up a plurality of areas and a lighting control unit for controlling control values with respect to two or more lighting fixtures that light up either a human absence area or a human presence area, has been known in the art (see, for example, Patent Literature 1).

### Citation List

### Patent Literature

Patent Literature 1: JP 2019-175780 A

### Summary of Invention

An object of the present disclosure is to provide a lighting system, a control method, and a program, all of which make a lighting device usable for multiple purposes.

A lighting system according to an aspect of the present disclosure includes a plurality of lighting devices and a control device. The plurality of lighting devices are installed in a facility. The control device controls the plurality of lighting devices. The control device controls lighting light projected by at least one lighting device, belonging to the plurality of lighting devices, into colored lighting light, of which a color is different from a color white, to give, upon acquiring information about an event in question, a sign depending on the event in question.

A control method according to another aspect of the present disclosure is a method for controlling a plurality of lighting devices installed in a facility. The control method includes controlling lighting light projected by at least one lighting device, belonging to the plurality of lighting devices, into colored lighting light, of which a color is different from a color white, to give, upon acquiring information about an event in question, a sign depending on the event in question.

A program according to still another aspect of the present disclosure is designed to cause a computer system to perform the control method according to the above-described aspect.

### Brief Description of Drawings

FIG. 1 is a block diagram of a lighting system according to a first embodiment;
FIG. 2 schematically illustrates an exemplary mode of use of the lighting system;
FIG. 3 is a partially cutaway plan view illustrating a light source for a lighting device included in the lighting system;
FIG. 4 is a flowchart showing an operating procedure of the lighting system;
FIG. 5 illustrates a first exemplary operation of the lighting system;
FIG. 6 illustrates a second exemplary operation of the lighting system;
FIG. 7 is a partially cutaway plan view illustrating a light source for a first variation of the lighting device included in the lighting system;
FIG. 8 is a partially cutaway plan view illustrating a light source for a second variation of the lighting device included in the lighting system;
FIG. 9 schematically illustrates an exemplary mode of use of a lighting system according to a second embodiment;
FIG. 10 is a block diagram of a lighting system according to a third embodiment;
FIG. 11 illustrates a first exemplary operation of the lighting system;
FIG. 12 illustrates a second exemplary operation of the lighting system;
FIG. 13 illustrates a third exemplary operation of the lighting system;
FIG. 14 is a block diagram of a lighting system according to a fourth embodiment;
FIG. 15 illustrates a first exemplary operation of the lighting system;
FIG. 16 illustrates a second exemplary operation of the lighting system;
FIG. 17 illustrates a third exemplary operation of the lighting system;
FIG. 18 is a partially cutaway plan view illustrating a light source for a third variation of the lighting device included in the lighting system according to the first embodiment;
FIG. 19 is a partially cutaway plan view illustrating a light source for a fourth variation of the lighting device included in the lighting system; and
FIG. 20 is a partially cutaway plan view illustrating a light source for a fifth variation of the lighting device included in the lighting system.

### Description of Embodiments

The drawings to be referred to in the following description of first to fourth embodiments and their variations are all schematic representations. Thus, the ratio of the dimensions (including thicknesses) of respective constituent elements illustrated on the drawings does not always reflect their actual dimensional ratio.

### (First embodiment)

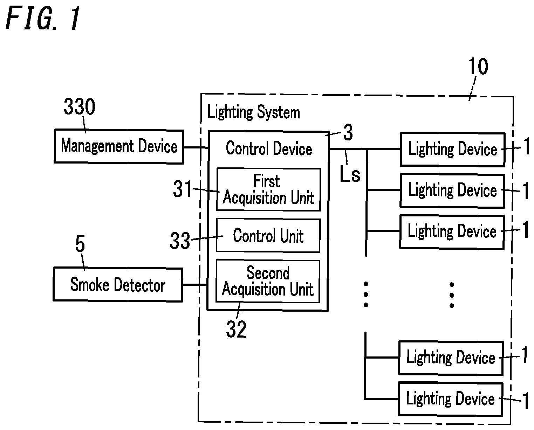

A lighting system 10 according to a first embodiment will now be described with reference to FIGS. 1-6.

### (1) Overview

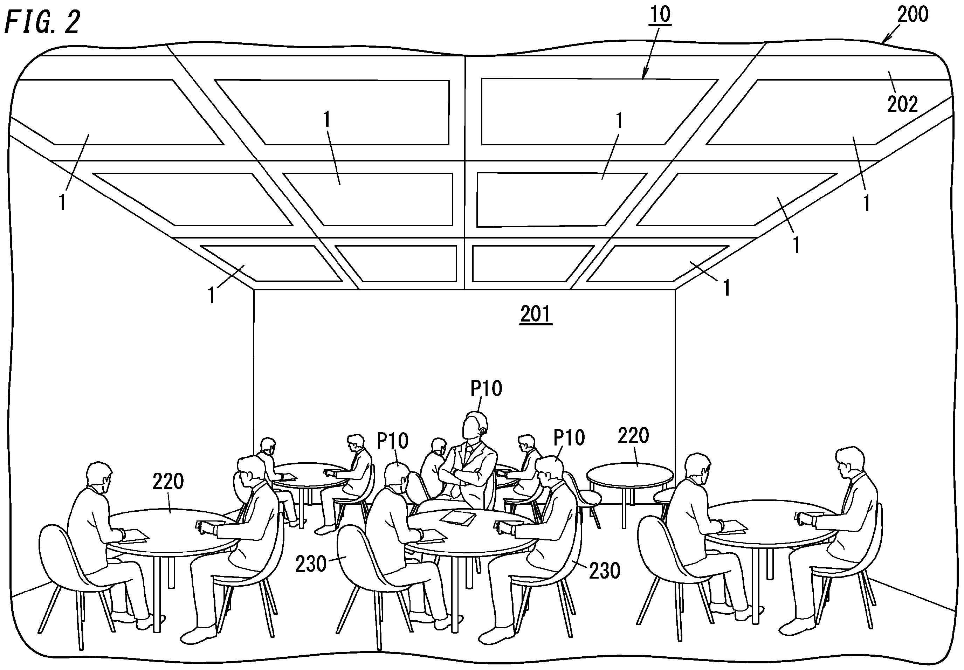

The lighting system 10 according to the first embodiment includes a plurality of lighting devices 1 and a control device 3 as shown in FIG. 1. The control device 3 controls the plurality of lighting devices 1. The plurality of lighting devices 1 are installed in a facility 200 as shown in FIG. 2. The facility 200 is supposed to be a building (more particularly, an office building). In the following description, the space that the plurality of lighting devices 1 faces inside the facility 200 will be hereinafter referred to as a "target space 201" for convenience's sake. As used herein, the target space 201 refers to a space used by persons (people) P10 inside the facility 200. Examples of the target space 201 include, without limitation, a conference room, a working space, a coworking space, and a recreation space. The facility 200 does not have to be an office building but may also be, for example, an office, a factory, a hospital, a hotel, an athletic stadium, an amusement facility, an airport, a single-family dwelling house, or a multi-family dwelling house.

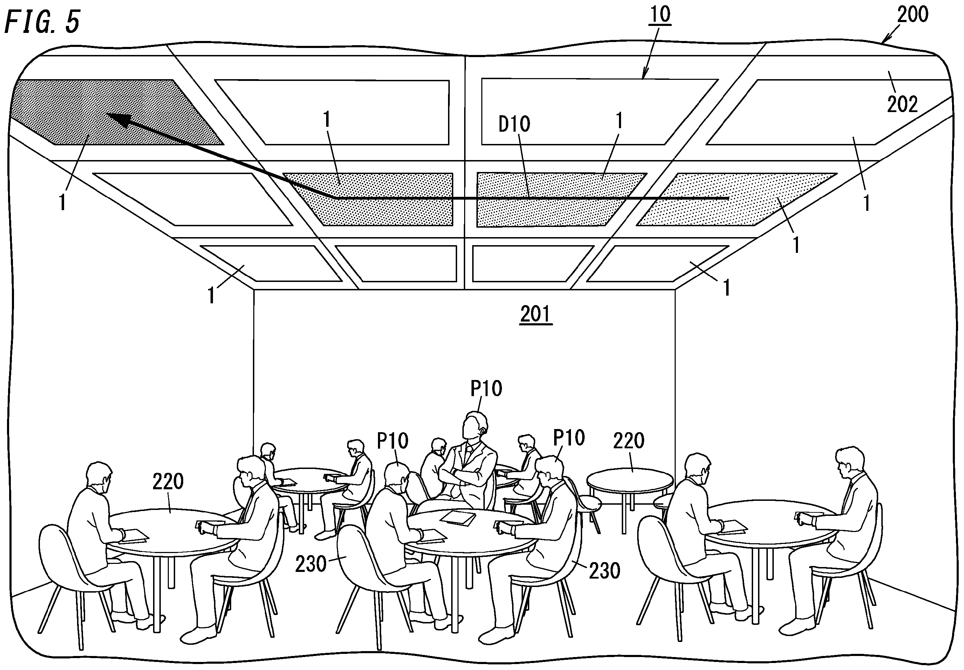

The control device 3 controls lighting light projected by at least one lighting device 1, belonging to the plurality of lighting devices 1, into colored lighting light, of which the color is different from a color white, to give, upon acquiring information about an event in question, a sign depending on the event in question. This allows the colored lighting light and the lighting device 1 that projects the colored lighting light to be used as information media. In FIG. 5, the light emergent surfaces of four lighting devices 1, belonging to a plurality of (e.g., twelve) lighting devices 1 and projecting colored lighting light in a color (such as red) different from the color white, are indicated by dotted hatch, while the light emergent surfaces of the other lighting devices 1 projecting white lighting light are not shaded by the dotted hatch.

### (2) Details

The lighting system 10 according to the first embodiment will be described in further detail with reference to FIGS. 1-6.

As described above, the lighting system 10 includes the plurality of lighting devices 1 and the control device 3.

The plurality of lighting devices 1 may be installed, for example, on the ceiling 202 facing the target space 201 in the facility 200 as shown in FIG. 2. The target space 201 is a space under the ceiling 202. In the target space 201 inside the facility 200, tables 220, chairs 230, and other pieces of furniture are arranged as fixtures and equipment which may be used by the people P10. In this example, each of the plurality of lighting devices 1 has a square shape when viewed from the target space 201. However, this is only an example and should not be construed as limiting. Alternatively, the lighting devices 1 may also have a rectangular shape or a circular shape. The plurality of lighting devices 1 are arranged to form a two-dimensional array when viewed from the target space 201. The plurality of lighting devices 1 may be lighting fixtures embedded in the ceiling, lighting fixtures mounted directly on the ceiling, panel lighting fixtures supported by a grid-shaped supporting member included in a system ceiling, or lighting fixture suspended from the ceiling.

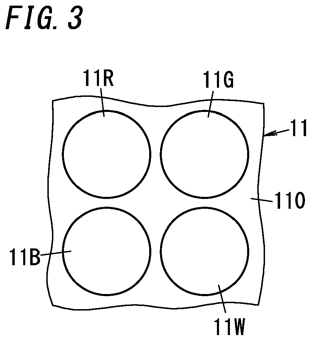

Each of the plurality of lighting devices 1 includes a light source 11 (refer to FIG. 3). The light source 11 may include, for example, a blue light-emitting diode (LED) 11B, a green LED 11G, a red LED 11R, and a white LED 11W as shown in FIG. 3.

The blue LED 11B emits blue light. The green LED 11G emits green light. The red LED 11R emits red light. The white LED 11W emits white light. The white light emitted from the white LED 11W may have a correlated color temperature equal to or greater than 2700 K and equal to or less than 6000 K, for example. The white LED 11W may include, for example, a blue LED chip and a wavelength-converting portion containing a wavelength-converting element that converts the wavelength of a part of the blue light emitted from the blue LED chip to radiate light having a different wavelength from the blue light. The wavelength-converting element is phosphor particles. The wavelength-converting portion may include, for example, a light-transmitting material portion and the phosphor particles. In this case, the wavelength-converting portion is formed as a mixture of the light-transmitting material portion and the phosphor particles. In the wavelength-converting portion, there are a great number of phosphor particles inside the light-transmitting material portion. A material for the light-transmitting material portion (i.e., light-transmitting material) is preferably a material that has high transmittance to visible light. The light-transmitting material may be, for example, a silicone-based resin. As the phosphor particles, yellow phosphor particles that radiate yellow light may be adopted, for example. The light (fluorescence) radiated from the yellow phosphor particles preferably has an emission spectrum having a primary emission peak wavelength in a wavelength range from 530 nm to 580 nm, for example. The yellow phosphor particles may be, but does not have to be, Y₃Al₅O₁₂ activated with Ce. In addition, the wavelength-converting portion does not have to include only the yellow phosphor particles as the wavelength-converting element but may include yellow phosphor particles, yellow-green phosphor particles, green phosphor particles, and red phosphor particles. That is to say, the wavelength-converting portion may include multiple types of phosphor particles. The yellow-green phosphor particles radiate yellow-green light. The green phosphor particles radiate green light. The red phosphor particles radiate red light.

The light source 11 further includes a mount board 110 as shown in FIG. 3. The mount board 110 may be, for example, a printed wiring board. The blue LED 11B, the green LED 11G, the red LED 11R, and the white LED 11W are mounted on the mount board 110. The light source 11 includes multiple sets of LEDs, each consisting of the blue LED 11B, the green LED 11G, the red LED 11R, and the white LED 11W, on a single mount board 110.

Each of the plurality of lighting devices 1 includes: a first driver circuit for driving a plurality of blue LEDs 11B; a second driver circuit for driving a plurality of green LEDs 11G; a third driver circuit for driving a plurality of red LEDs 11R; a fourth driver circuit for driving a plurality of white LEDs 11W; and a control circuit for controlling the first to fourth driver circuits. Each of the plurality of lighting devices 1 may provide, as lighting light, any one of white light, blue light, green light, or red light, or light, of which the color is a mixture of two or more of these four types of light by making the control circuit control the first to fourth driver circuits. That is to say, each of the plurality of lighting devices 1 may provide, as either colored lighting light or white light, light corresponding to an arbitrary chromaticity point falling within a triangle, of which the vertices are defined by a chromaticity point of blue light emitted from the blue LED 11B, a chromaticity point of green light emitted from the green LED 11G, and a chromaticity point of red light emitted from the red LED 11R, in an xy chromaticity diagram of the XYZ color system. The white light preferably has a chromaticity corresponding to a chromaticity point on a black body locus in the xy chromaticity diagram of the XYZ color system.

The control device 3 (refer to FIG. 1) may be connected, via a communications network, to a management device 330 (refer to FIG. 1) that stores facility information about the facility 200 (refer to FIG. 2), for example. The management device 330 may be, for example, a server. The communications network may include the Internet. The communications network does not have to be a network compliant with a single communications protocol but may also be made up of a plurality of networks compliant with multiple different communications protocols. The communications protocol may be selected from various known wired and wireless communications standards. The communications network may include, as needed, any of various data communications devices such as a repeater hub, a switching hub, a bridge, a gateway, and a router.

As used herein, the facility information refers to, for example, part or all of three-dimensional data representing the structure of the facility 200. The three-dimensional data herein refers to data representing the facility 200 in a virtual space, which is built by using a computer. The three-dimensional data of this type may, for example, building information modeling (BIM) data. In the following description, the three-dimensional data will be hereinafter referred to as "BIM data."

In the BIM data, not only data representing the shape and dimensions of the facility 200 but also multiple types of data about the facility 200, such as data about the building components of the facility 200 and data about the equipment installed in the facility 200, are integrated together. In addition, the BIM data further includes information about the latitude and longitude of a reference position in the facility 200 and information about the orientation of the facility 200. That is to say, the BIM data includes not just data that was used to build the facility 200 but refers to a set of various types of data about the facility 200. The BIM data may be, for example, information represented by using a three-dimensional computer-aided design (CAD) system and may be made up of data representing the shape and dimensions of the facility 200. Using the BIM data allows a figure, representing part or all of the facility 200, to be displayed on a monitor screen. The BIM data is hierarchized according to the given facility 200. The BIM data may include, for example, information representing the entire facility 200 as either a front view or a perspective view, information representing a plurality of floors of the facility 200 as either a plan view or a perspective view, and information representing a single floor thereof as either a plan view or a perspective view. For example, the BIM data may include, for example, data representing a perspective view of the entire building as the facility 200, data representing a plan view of a single floor inside the building, or data representing a perspective view of a room of the building as viewed from inside the room. Facility information (i.e., BIM data) and location information may both be displayed by using software that allows a program described in a programming language such as Java (R) to be executed. For example, a web browser compatible with Web Graphic Library (Web GL) may display three-dimensional data of the facility 200 on a display unit.

As shown in FIG. 1, the control device 3 includes a first acquisition unit 31 for acquiring the BIM data from the management device 330. The control device 3 further includes a second acquisition unit 32 for acquiring fire outbreak information about the facility 200 (refer to FIG. 2). The second acquisition unit 32 receives a fire outbreak signal (alarm signal) from, for example, either a smoke detector 5 (refer to FIG. 1) installed in the facility 200 or an automatic fire alarm system. As used herein, the automatic fire alarm system is a disaster prevention system which may alert, when detecting an outbreak of fire, for example, a person staying in the target of disaster prevention to the outbreak of fire. In this example, the target of disaster prevention is the facility 200. The smoke detector 5 may be one of constituent elements of the automatic fire alarm system.

The control device 3 further includes a control unit 33 for controlling the plurality of lighting devices 1. The control device 3 and the plurality of lighting devices 1 are connected together via a signal line Ls, for example, so that a control signal may be transmitted from the control device 3 to the plurality of lighting devices 1. Identification information (unique addresses) are assigned on an individual basis to the plurality of lighting devices 1. Each of the plurality of lighting devices 1 includes a storage unit that stores its own unique address. In the control device 3, the control unit 33 has three operation modes, namely, a first mode, a second mode, and a third mode. In the first mode (collective control mode), the control unit 33 controls two or more lighting devices 1, belonging to the plurality of lighting devices 1, collectively with the same specifics of control. In the second mode (pattern control mode), the control unit 33 controls either a single lighting device 1 or two or more lighting devices 1 with the specifics of control set in advance for the respective lighting devices 1. In the third mode (individual control mode), the control unit 33 controls the plurality of lighting devices 1 on an individual basis. The control unit 33 includes a memory that stores the respective unique addresses of the plurality of lighting devices 1. The control unit 33 stores, in the memory, a collective control address for use in the first mode and a group control address for use in the second mode. In that case, the storage unit of each of the plurality of lighting devices 1 stores not only the unique address but also the group control address and the collective control address as well.

The control device 3 determines, based on the BIM data acquired by the first acquisition unit 31, the location information of the plurality of lighting devices 1 in the facility 200 (i.e., the location coordinates of the lighting devices 1 in the facility 200) and makes the memory store the location information of the plurality of lighting devices 1 in the facility 200 and the unique addresses of the plurality of lighting devices 1, which are associated one to one with each other. The control signal transmitted from the control unit 33 to each lighting device 1 includes address data corresponding to the unique address, collective control address, or group address of the lighting device 1 as the target of control and control data representing the specifics of control (in terms of the color, ON/OFF states, flickering, illuminance, and other parameters of the lighting light) to be performed on the lighting device 1 as the target of control. The color of the lighting light is either the color white or a color different from white (such as a color red, a color green, or a color blue). The specifics of control may include control data including specifics of control indicating the chromaticity of the lighting light, instead of the control data including the specifics of control indicating the color of the lighting light.

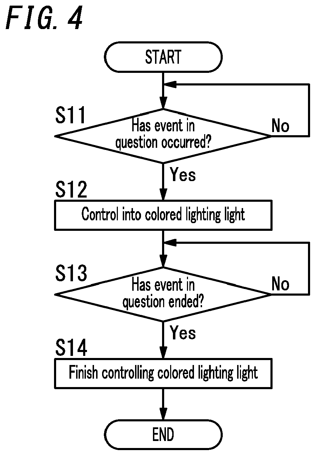

The control unit 33 controls the lighting light projected by at least one lighting device 1 (e.g., four lighting devices 1 in the example shown in FIG. 5), belonging to the plurality of (e.g., twelve in the example shown in FIG. 5) lighting devices 1, into colored lighting light, of which the color is different from the color white, to give, when the second acquisition unit 32 acquires information about an event in question (e.g., fire in this example), a sign depending on the event in question (e.g., fire). More specifically, as shown in FIG. 4, the control unit 33 controls the lighting light projected by at least one lighting device 1 into colored lighting light, of which the color (e.g., red) is different from the color white, to give, in response to acquisition of information about the event in question (if the answer is YES in Step S 11), a sign depending on the event in question (in Step S12). Thereafter, when no information about the event in question is acquired any longer (if the answer is YES in Step S13), the control unit 33 finishes controlling the colored lighting light. As used herein, to "finish controlling the colored lighting light" means either controlling the lighting light projected by the lighting device 1 into white lighting light or turning the lighting device 1 OFF. When controlling the lighting light projected by at least one lighting device 1, belonging to the plurality of lighting devices 1, into colored lighting light, of which the color is different from the color white, the control unit 33 may operate in, for example, the second mode. If the event in question is fire, then the field of view may be narrowed by smoke involved with the fire. That is why if the smoke detector 5 that has sounded an alarm in the facility 200 is the smoke detector installed in the target space 201, then the color of the colored lighting light is preferably a color with a relatively long wavelength, e.g., color red, to increase the visibility. Note that the control device 3 also stores the location information of the smoke detector 5 based on the BIM data.

In this example, the event in question is an event (e.g., fire in this example) that necessitates giving guidance to at least one person (e.g., people in this case) P10 staying in the facility 200. The control device 3 controls the at least one lighting device 1 to give, as a sign for the people P10 staying in the facility 200 on acquiring information about the event in question (e.g., fire outbreak information), a sign indicating a direction D 10 to which the people P10 staying in the target space 201 inside the facility 200 are to be guided (e.g., a direction leading from the target space 201 to an emergency door or an exit). In this case, the control device 3 may give the sign, indicating the direction D10 to which the people P10 are to be guided, by, for example, gradation of the colored lighting light as shown in FIG. 5. The gradation of the colored lighting light may be changed, for example, such that the colored lighting light gradually increases its shade from one lighting device 1, located at the starting point, out of the four lighting devices 1 showing the gradation of the lighting light toward another lighting device 1, located at the end point, with the lighting device 1 at the starting point providing colored lighting light with the lightest shade and with the lighting device 1 at the end point providing colored lighting light with the darkest shade. In FIG. 5, the respective shades of the colored lighting light at the light emergent surfaces of the four lighting devices 1 are represented by four different types of dotted hatches.

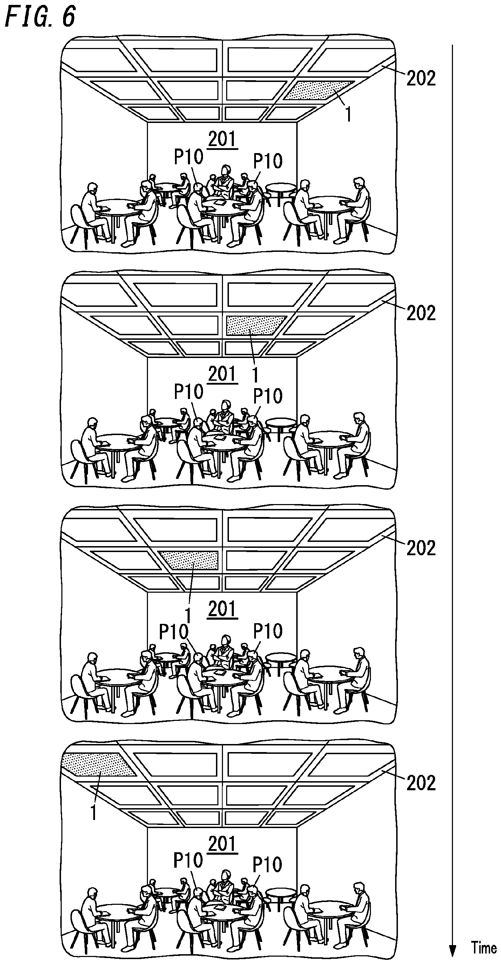

Alternatively, the control device 3 may also give the sign, indicating the direction to which the people P10 staying in the target space 201 inside the facility 200 are to be guided, by, for example, sequentially changing the lighting devices 1 to project the colored lighting light one after another in the direction to which the people P10 are to be guided as shown in FIG. 6. In FIG. 6, only the light emergent surface of the lighting device 1, projecting the colored lighting light, out of the plurality of lighting devices 1 is shaded by the dotted hatch.

The control device 3 (refer to FIG. 1) includes a computer system. The computer system may include a processor and a memory as principal hardware components. The functions of the control device 3 may be performed by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits include a system LSI, a very-large-scale integrated circuit (VLSI), and an ultra-large-scale integrated circuit (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

### (3) Control method and program

A control method according to the first embodiment is a method for controlling a plurality of lighting devices 1 installed in a facility 200. The control method according to the first embodiment includes controlling lighting light projected by at least one lighting device 1, belonging to the plurality of lighting devices 1, into colored lighting light, of which the color is different from the color white, to give, upon acquiring information about an event in question, a sign depending on the event in question.

A program according to the first embodiment is designed to cause a computer system (control device 3) to perform the control method described above.

### (4) Recapitulation

A lighting system 10 according to the first embodiment includes a plurality of lighting devices 1 and a control device 3. The plurality of lighting devices 1 are installed in a facility 200. The control device 3 controls the plurality of lighting devices 1. The control device 3 controls lighting light projected by at least one lighting device 1, belonging to the plurality of lighting devices 1, into colored lighting light, of which the color is different from the color white, to give, upon acquiring information about an event in question (such as fire outbreak information), a sign depending on the event in question. Thus, the lighting system 10 according to the first embodiment allows the lighting device 1 to be used for multiple purposes. For example, in a normal state where the control device 3 acquires no information about an event in question, the lighting system 10 may use the plurality of lighting devices 1 as main lighting for lighting up the target space 201 in the facility 200. On the other hand, when the control device 3 acquires information about the event in question, the lighting system 10 may use the lighting device 1 as signage lighting that gives a sign depending on the event in question.

In addition, at an outbreak of fire in the facility 200, the lighting system 10 according to the first embodiment may give a sign guiding the people P10 staying in the target space 201 to an evacuation route such as an emergency exit.

### (5) Variations of lighting devices in lighting system according to first embodiment

### (5.1) First variation

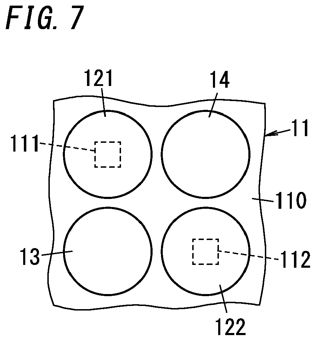

The light source 11 included in each of the plurality of lighting devices 1 may include, for example, a first blue LED 111, a second blue LED 112, a first wavelength-converting portion 121, a second wavelength-converting portion 122, a visible light LED 13 (hereinafter referred to as a "first visible light LED 13"), and another visible light LED 14 (hereinafter referred to as a "second visible light LED 14") as shown in FIG. 7.

The first blue LED 111 emits first blue light. The second blue LED 112 emits second blue light. The first wavelength-converting portion 121 contains green phosphor particles that radiate green light when excited by the first blue light. The second wavelength-converting portion 122 contains red phosphor particles that radiate red light when excited by the second blue light. The first visible light LED 13 emits visible light (hereinafter referred to as "first visible light") in a different color from any one of the first blue light, the second blue light, or white light. The second visible light LED 14 emits visible light (hereinafter referred to as "second visible light") in a different color from any one of the first blue light, the second blue light, or white light. The peak wavelength of the second blue light may be the same as, or different from, the peak wavelength of the first blue light, whichever is appropriate. The first visible light may be, for example, red light. The second visible light may be, for example, green light. The first visible light and the second visible light do not have to have two different colors but may also have the same color. In addition, the light source 11 does not have to include both the first visible light LED 13 and the second visible light LED 14 but may include at least one of the first visible light LED 13 or the second visible light LED 14.

The first blue LED 111, the second blue LED 112, the first wavelength-converting portion 121, the second wavelength-converting portion 122, the first visible light LED 13, and the second visible light LED 14 are mounted on the mount board 110. The light source 11 includes multiple sets, each consisting of the first blue LED 111, the second blue LED 112, the first wavelength-converting portion 121, the second wavelength-converting portion 122, the first visible light LED 13, and the second visible light LED 14, on a single mount board 110.

Each of the plurality of lighting devices 1 includes: a driver circuit for driving a plurality of first blue LEDs 111; a driver circuit for driving a plurality of second blue LEDs 112; a driver circuit for driving a plurality of first visible light LEDs; a driver circuit for driving a plurality of second visible light LEDs 14; and a control circuit for controlling these driver circuits.

The first variation improves the color rendering performance of the lighting light projected by the lighting device 1 when the lighting device 1 is used as main lighting.

### (5.2) Second variation

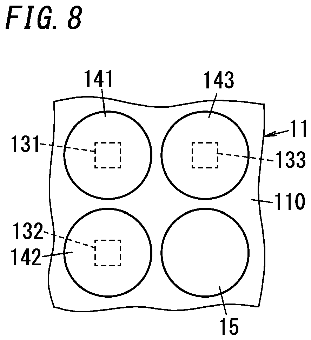

The light source 11 included in each of the plurality of lighting devices 1 may include, for example, a first violet LED 131, a second violet LED 132, a third violet LED 133, a first wavelength-converting portion 141, a second wavelength-converting portion 142, and a third wavelength-converting portion 143 as shown in FIG. 8. The light source 11 further includes a visible light LED 15.

The first violet LED 131 emits first violet light. The second violet LED 132 emits second violet light. The third violet LED 133 emits third violet light. The first wavelength-converting portion 141 contains blue phosphor particles that radiate blue light when excited by the first violet light. The second wavelength-converting portion 142 contains green phosphor particles that radiate green light when excited by the second violet light. The third wavelength-converting portion 143 contains red phosphor particles that radiate red light when excited by the third violet light. The visible light LED 15 emits visible light (such as red light). The respective peak wavelengths of the first violet light, the second violet light, and the third violet light may be the same as each other or different from each other, whichever is appropriate. The visible light emitted from the visible light LED 15 does not have to be red light but may also be green light. The light source 11 does not have to include the visible light LED 15.

The first violet LED 131, the second violet LED 132, the third violet LED 133, the first wavelength-converting portion 141, the second wavelength-converting portion 142, the third wavelength-converting portion 143, and the visible light LED 15 are mounted on the mount board 110. In addition, the light source 11 includes multiple sets, each consisting of the first violet LED 131, the second violet LED 132, the third violet LED 133, the first wavelength-converting portion 141, the second wavelength-converting portion 142, the third wavelength-converting portion 143, and the visible light LED 15, on the single mount board 110.

Each of the plurality of lighting devices 1 includes: a driver circuit for driving a plurality of first violet LEDs 131; a driver circuit for driving a plurality of second violet LEDs 132; a driver circuit for driving a plurality of third violet LEDs 133; a driver circuit for driving a plurality of visible light LEDs 15; and a control circuit for controlling these driver circuits.

The second variation improves the color rendering performance of the lighting light projected by the lighting device 1 when the lighting device 1 is used as main lighting.

### (Second embodiment)

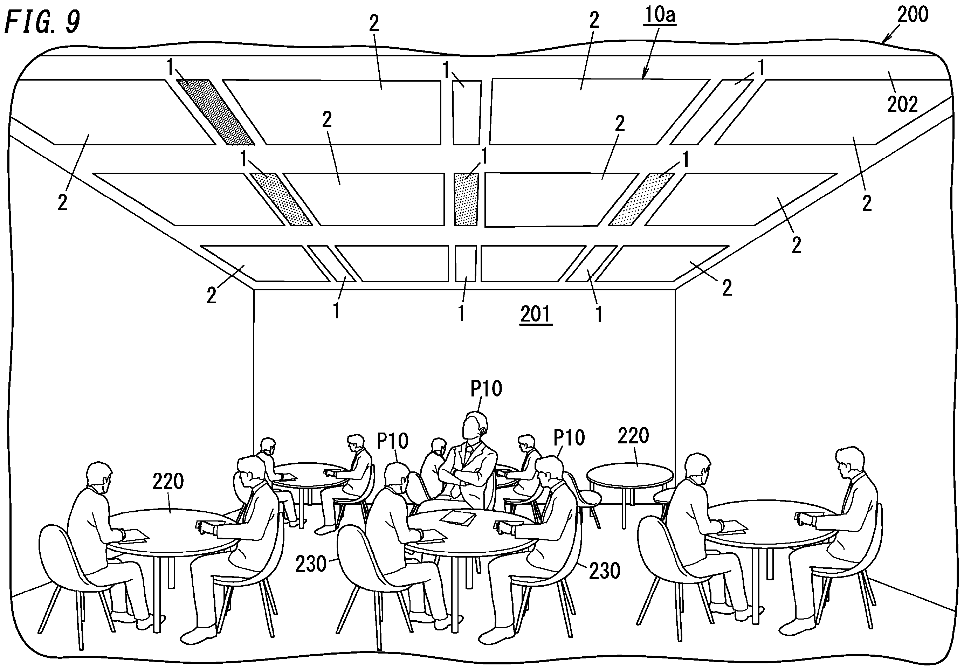

Alighting system 10a according to a second embodiment will be described with reference to FIG. 9. In the following description, any constituent element of the lighting system 10a according to this second embodiment, having the same function as a counterpart of the lighting system 10 according to the first embodiment, will be designated by the same reference numeral as that counterpart's, and description thereof will be omitted herein.

The lighting system 10a further includes a plurality of second lighting devices 2 provided separately from a plurality of first lighting devices 1 and installed in the facility 200. The plurality of first lighting devices 1 serves as the plurality of the lighting devices 1.

The lighting light projected by the plurality of second lighting devices 2 is white light. In this embodiment, the lighting light projected by the plurality of second lighting devices 2 is white light having a correlated color temperature equal to or greater than 2700 K and equal to or less than 6000 K.

The control device 3 controls the plurality of lighting devices 1 and the plurality of second lighting devices 2. The control device 3 stores identification information and location information of the plurality of second lighting devices 2.

In the lighting system 10a, the second lighting devices 2 are arranged adjacent to the first lighting devices 1 in one direction. The light emergent surface of each of the first lighting devices 1 has a rectangular shape. The light emergent surface of each of the second lighting devices 2 has a rectangular shape. In this lighting system 10a, the light emergent surface of each of the first lighting devices 1 has a smaller area than the light emergent surface of each of the second lighting devices 2. In the lighting system 10a, the lighting area of each first lighting device 1 is narrower than the lighting area of each second lighting device 2.

The lighting system 10a may use, as main lighting, the lighting light projected by the plurality of second lighting devices 2.

In the lighting system 10a, the control device 3 controls the lighting light projected by at least one first lighting device 1, belonging to the plurality of first lighting devices 1, into colored lighting light, of which the color is different from the color white, to give, upon acquiring information about an event in question, a sign depending on the event in question. This allows the colored lighting light and the first lighting device 1 that provides the colored lighting light to be used as information media. In FIG. 9, the light emergent surfaces of four first lighting devices 1, belonging to a plurality of (e.g., nine) lighting devices 1 and projecting colored lighting light in a color (such as red) different from the color white, are indicated by dotted hatch, while the light emergent surfaces of the other first lighting devices 1 that are either projecting white lighting light or turned OFF are not shaded by the dotted hatch.

Optionally, in the lighting system 10a, the plurality of second lighting devices 2 may adjust the correlated color temperature of the lighting light.

### (Third embodiment)

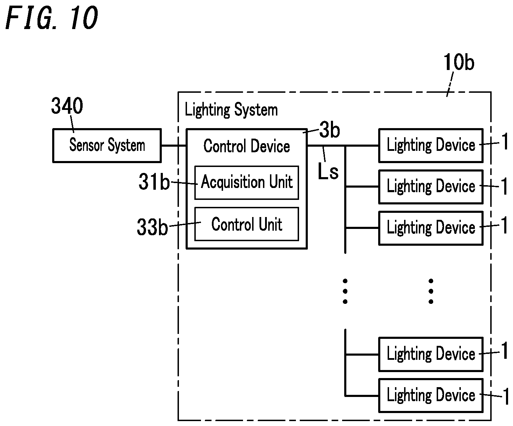

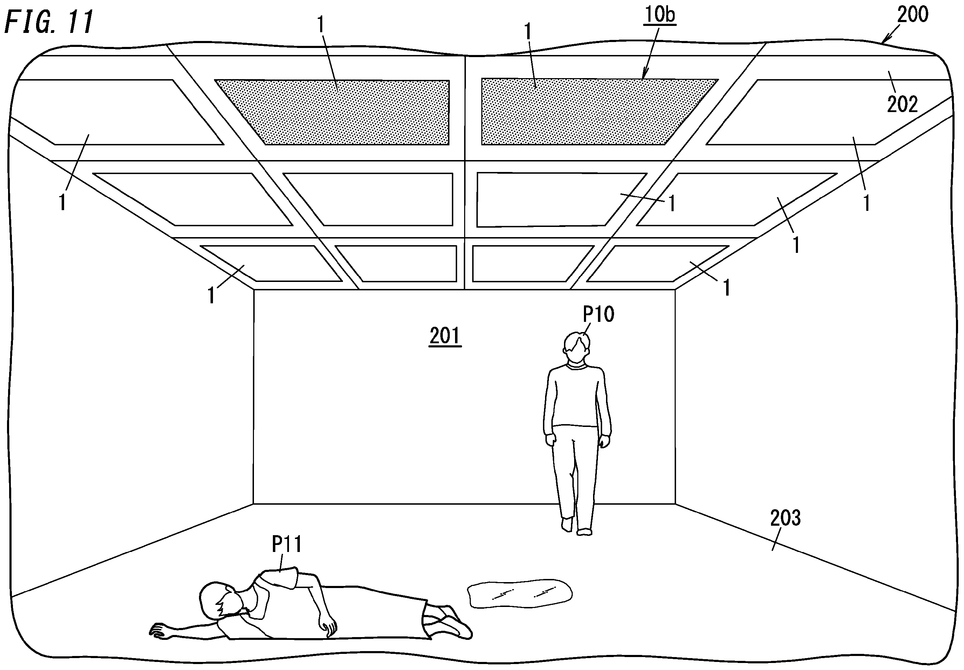

Next, a lighting system 10b according to a third embodiment will be described with reference to FIGS. 10 and 11. The lighting system 10b according to the third embodiment includes a control device 3b instead of the control device 3 included in the lighting system 10 according to the first embodiment, which is a difference from the lighting system 10 according to the first embodiment. In the following description, any constituent element of the lighting system 10b according to this third embodiment, having the same function as a counterpart of the lighting system 10 according to the first embodiment, will be designated by the same reference numeral as that counterpart's, and description thereof will be omitted herein.

In this lighting system 10b, the control device 3b acquires information about the event in question from a sensor system 340.

The sensor system 340 includes an image sensor including a camera for capturing an image of the target space 201 that the plurality of lighting devices 1 face in the facility 200. The image sensor of the camera may be, for example, a complementary MOS (CMOS) image sensor. The image sensor does not have to be a CMOS image sensor but may also be a charge coupled device (CCD) image sensor or an infrared image sensor, for example. The image sensor may detect, based on the image captured and generated by the camera, the state of a person P10, for example, in the target space 201. The image sensor may detect the state of the person P10 by performing image processing on the image and thereby determining a feature quantity of the target (such as the person P10). Optionally, the sensor system 340 may include a plurality of image sensors for a single target space 201. In the sensor system 340, identification information (addresses) is assigned to the image sensors on an individual basis.

The control device 3b includes: an acquisition unit 31b for acquiring information about an event in question from the sensor system 340; and a control unit 33b for controlling, when the acquisition unit 31b acquires the information about the event in question, lighting light projected by at least one lighting device 1, belonging to the plurality of lighting devices 1, into colored lighting light, of which the color is different from the color white, to give a sign depending on the event in question. The control device 3b may make a memory of the control unit 33b store, based on location information of the lighting device 1, the light area of the lighting device 1, location information of the image sensor, and the image capturing area of the image sensor, for example, identification information of a single image sensor in association with either the identification information of a single lighting device 1 or the identification information of two or more lighting devices 1.

In the lighting device 10b, the event in question is an event that necessitates calling a person's P10 attention to his or her direction of movement in the facility 200. The control device 3b controls the at least one lighting device 1 to give, upon acquiring information about the event in question, a sign, calling the person's P10 attention to the direction of movement, as the sign. This allows the lighting system 10b, when the control device 3b acquires, as information about the event in question, information about an event that necessitates calling the person's P10 attention to the direction of movement in the facility 200, to give, using the colored lighting light projected by the lighting device 1, a sign calling the person's P10 attention to the direction of movement to him or her.

In the example shown in FIG. 11, the event in question is an event that the floor surface 203 is wet and a person P11 is lying on the floor surface 203 in the direction of movement of the person P10 in the facility 200. In FIG. 11, the light emergent surfaces of two lighting devices 1, belonging to a plurality of (e.g., twelve) lighting devices 1 and projecting colored lighting light in a color (such as red) different from the color white, are indicated by dotted hatch, while the light emergent surfaces of the other lighting devices 1 that are projecting white lighting light or are turned OFF are not shaded by the dotted hatch. The lighting system 10b may contribute, by giving a sign calling attention to the event that the floor surface 203 is wet, to preventing the person P10 from slipping and falling down. In addition, the lighting system 10b may notify, by giving a sign calling attention to the event that the person P11 is lying on the floor surface 203, the person P10 of the presence of the person P11 lying on the floor surface 203.

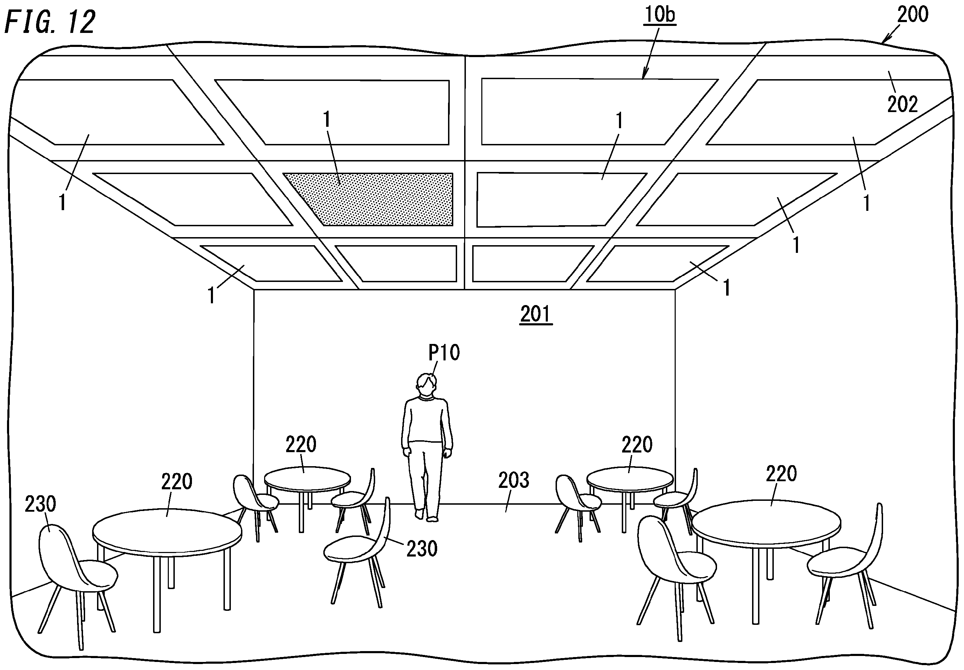

In the example shown in FIG. 12, the event in question is an event that a chair 230 is present right in front of the person P10 who is walking in the direction of movement inside the facility 200. In FIG. 12, the light emergent surface of one lighting device 1, belonging to a plurality of (e.g., twelve) lighting devices 1 and projecting colored lighting light in a color (such as red) different from the color white, is indicated by dotted hatch, while the light emergent surfaces of the other lighting devices 1 that are projecting white lighting light or are turned OFF are not shaded by the dotted hatch. The lighting system 10b may contribute, by calling attention to the event that the chair 230 is present right in front of the person P10 who is walking in the direction of movement, to preventing the person P10 from colliding against the chair 230.

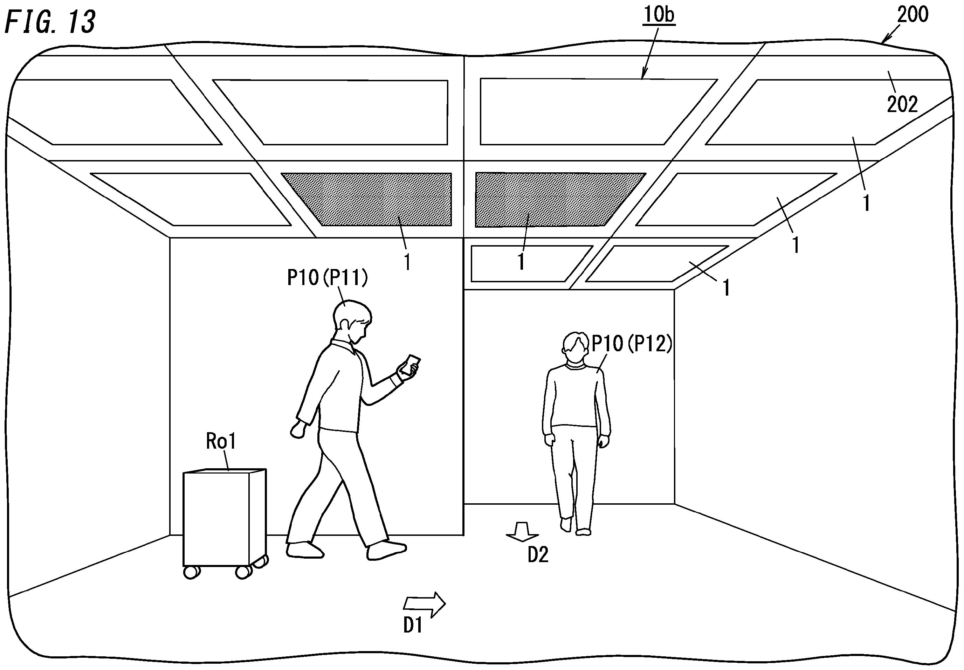

In the example shown in FIG. 13, the event in question is an event that a person P10 (P11) is approaching, from a first direction D1, an intersection between passages inside the facility 200. The control device 3b controls a lighting device 1, belonging to the plurality of lighting devices 1 and lighting up the intersection, to give, upon acquiring information about the event in question, a sign, telling the presence of the person P10 (P11), who is approaching the intersection from the first direction D1, to another person P10 (P12), as the sign. The other person P10 (P12) is also approaching the intersection from a second direction D2 different from the first direction D1. In FIG. 13, the light emergent surfaces of two lighting devices 1, belonging to a plurality of (e.g., ten) lighting devices 1 and projecting colored lighting light in a color (such as red) different from the color white, are indicated by dotted hatch, while the light emergent surfaces of the other lighting devices 1 that are projecting white lighting light or are turned OFF are not shaded by the dotted hatch. The lighting system 10b reduces the chances of the person P11 who is approaching the intersection from the first direction D1 and the person P12 who is also approaching the intersection from the second direction D2 colliding against each other when the two persons P11, P12 meet at the intersection. The lighting system 10b may control the lighting device 1 to change the color of the colored lighting light according to the approach speed of the person P10 (P11) who is approaching the intersection. For example, if the approach speed is less than a threshold value, the lighting system 10b may make the lighting device 1 change the color of its lighting light into a color yellow. On the other hand, if the approach speed is equal to or greater than than the threshold value, the lighting system 10b may make the lighting device 1 change the color of the lighting light into a color red.

Alternatively, in the example shown in FIG. 13, the event in question may also be an event that a robot Ro1 is moving inside the facility 200. In that case, the control device 3b controls at least one lighting device 1 to give, upon acquiring information about the event in question, a sign, indicating a route that the robot Ro1 is scheduled to follow in the facility 200, as the sign. This allows the lighting system 10b to call the attention of the person P10 in the facility 200 to the presence of the robot Ro1. Specifically, in the example shown in FIG. 13, the lighting system 10b may tell the person P12 who is approaching the intersection from the second direction D2 that the robot Ro1 is moving toward the intersection from the first direction D1. In this example, the control device 3b is configured to control at least one lighting device 1 to give, upon acquiring information about the event in question, a sign, indicating the route that the robot Ro1 is scheduled to follow in the facility 200, as the sign, to the person P10 who is walking around the robot Ro1. However, this is only an example and should not be construed as limiting. Alternatively, the control device 3b may also be configured to control at least one lighting device 1 to give, upon acquiring information about the event in question, a sign telling the robot Ro1 in the facility 200 the next route that the robot Ro1 is supposed to follow.

Still alternatively, in the example shown in FIG. 13, the event in question may also be an event that that the person P10 (P11) is walking inside the facility 200 without looking ahead carefully. In that case, the sensor system 340 detects, using an image sensor, the person P10 who is watching the screen of his or her smartphone, for example, while walking as the person P11 who is walking without looking ahead carefully. The control device 3b controls at least one lighting device 1 to give, upon acquiring information about the event in question, a sign, calling attention of either the person P11 who is walking without looking ahead carefully or a person P12 who is approaching the person P11, as the sign. In the example shown in FIG. 13, the lighting system 10b may call, using the colored lighting light, attention of both the person P11 who is walking without looking ahead carefully and the person P12 who is approaching the person P11. Note that the event that the person P10 is walking without looking ahead carefully does not have to be the event that the person P10 is watching the screen of his or her smartphone while walking but may also be an event that the person P10 is talking over his or her smartphone while walking or an event that the person P10 is turning toward a neighboring person to speak with him or her while walking.

### (Fourth embodiment)

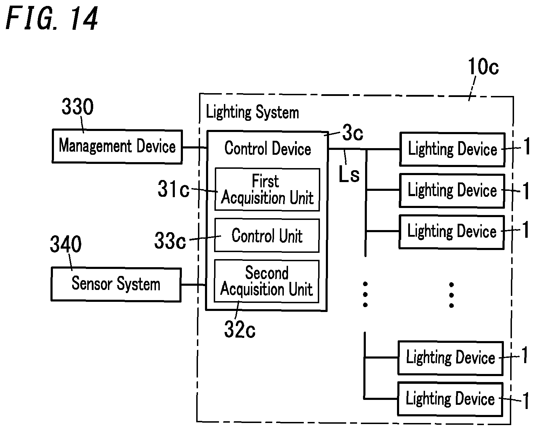

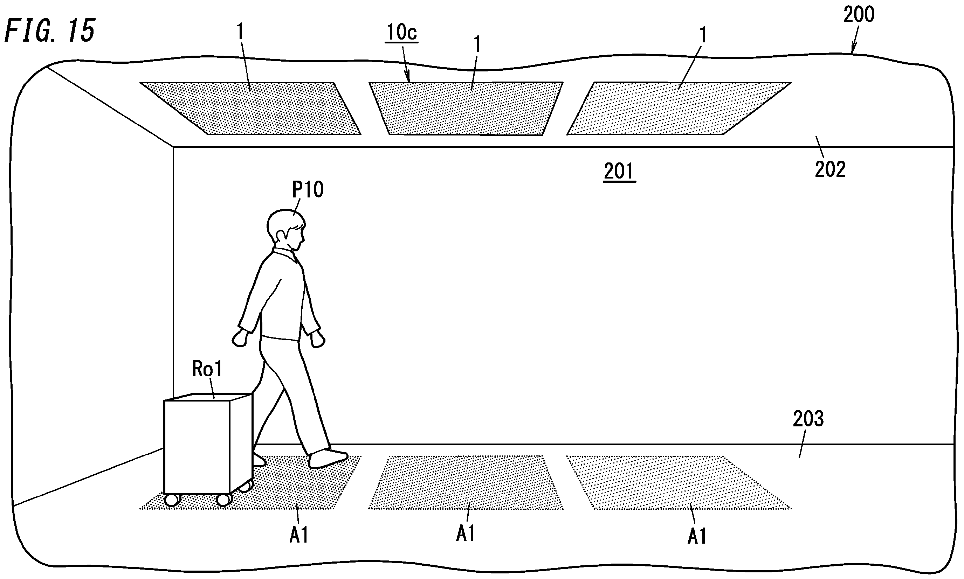

Next, a lighting system 10c according to a fourth embodiment will be described with reference to FIGS. 14 and 15. The lighting system 10c according to the fourth embodiment includes a control device 3c instead of the control device 3b of the lighting system 10b according to the third embodiment, which is a difference from the lighting system 10b according to the third embodiment. In the following description, any constituent element of the lighting system 10c according to this fourth embodiment, having the same function as a counterpart of the lighting system 10b according to the third embodiment, will be designated by the same reference numeral as that counterpart's, and description thereof will be omitted herein.

In the lighting system 10c, the control device 3c includes: a first acquisition unit 31c for acquiring BIM data of the facility 200; a second acquisition unit 32c for acquiring information about an event in question; and a control unit 33c for controlling the plurality of lighting devices 1. The first acquisition unit 31c, as well as the first acquisition unit 31 of the control device 3 included in the lighting system 10 according to the first embodiment, acquires the BIM data of the facility 200 from the management device 330. The second acquisition unit 32c, as well as the acquisition unit 31b of the control device 3b included in the lighting system 10b according to the third embodiment, acquires information about the event in question from the sensor system 340. The control unit 33c controls lighting light projected by at least one lighting device 1 (e.g., three lighting devices 1 in the example shown in FIG. 15), belonging to the plurality of lighting devices 1, into colored lighting light, of which the color is different from the color white, to give, when the second acquisition unit 32c acquires information about an event in question, a sign depending on the event in question.

In the lighting system 10c, the event in question is an event that a person P10 is moving inside the facility 200 as shown in FIG. 15, for example. The control device 3c controls the at least one lighting device 1 to give, upon acquiring information about the event in question, a sign, indicating the flow line of the person P10 who is moving inside the facility 200, as the sign. This allows the lighting system 10c to give, using colored lighting light, a sign indicating the flow line of the person P10. Thus, the lighting system 10c may control the flow line of the person P10 who is moving inside the facility 200.

The control device 3c may give the sign, indicating the flow line of the person P10, by, for example, gradation of the colored lighting light, of which the color (e.g., green) is different from the color white, as shown in FIG. 15. The gradation of the colored lighting light may be changed, for example, such that the colored lighting light gradually decreases its shade from one lighting device 1, located at the starting point, out of the three lighting devices 1 showing the gradation of the lighting light toward another lighting device 1, located most distant from the starting point, with the lighting device 1 at the starting point projecting colored lighting light with the darkest shade and with the lighting device 1 most distant from the starting point projecting colored lighting light with the lightest shade. In FIG. 15, the respective shades of the colored lighting light at the light emergent surfaces of the lighting devices 1 are represented by different types of dotted hatches. In addition, in FIG. 15, on the floor surface 203 of the facility 200, each area A1 lighted up by the color lighting light is indicated by the same type of dotted hatch as the light emergent surface of the lighting device 1 corresponding to the area A1. Note that in FIG. 15, each area lighted up on the floor surface 203 by the colored lighting light projected by a corresponding lighting device 1 (i.e., each area A1 lighted up by the colored lighting light) is illustrated as having the same dimensions as the light emergent surface of the lighting device 1. Actually, however, the area A1 has larger dimensions than the light emergent surface of the corresponding lighting device 1.

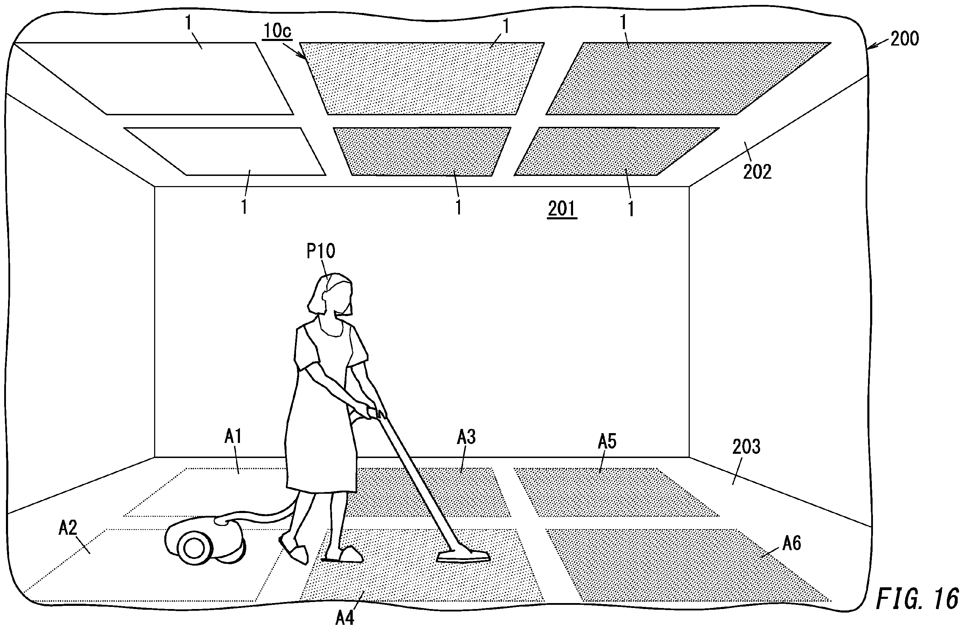

In the lighting system 10c, the event in question may also be, for example, an event that a person P10 is cleaning the facility 200 as shown in FIG. 16. The control device 3c controls particular lighting devices 1 to give, upon acquiring information about the event in question, a sign, indicating uncleaned areas (e.g., areas A3-A6 out of the areas A1-A6 in the example shown in FIG. 16) in the facility 200, as the sign. The particular lighting devices 1 belong to the plurality of lighting devices 1 and are lighting up the uncleaned areas. Thus, the lighting system 10c may make the uncleaned areas more easily recognizable for the person P10 who is doing cleaning.

The lighting light projected by the lighting devices 1 that light up the uncleaned areas is colored lighting light, of which the color (e.g., color red) is different from the color white. In FIG. 16, the respective light emergent surfaces of the lighting devices 1 projecting the colored lighting light in a different color from the color white are indicated by the dotted hatch. In addition, in FIG. 16, on the floor surface 203 of the facility 200, the areas A3-A6 (i.e., the uncleaned areas A3-A6) lighted up by the color lighting light in the different color from the color white are indicated by the same dotted hatches as the respective light emergent surfaces of the lighting device 1 corresponding to the areas A3-A6. Note that in FIG. 16, each area lighted up by the colored lighting light projected by a corresponding one of the four lighting devices 1 (i.e., each of the four areas A3-A6 lighted up with the colored lighting light) is illustrated as having the same dimensions as the light emergent surface of the corresponding lighting device 1. Actually, however, the four areas A3-A6 have larger dimensions than the respective light emergent surfaces of the corresponding four lighting device 1. A determination may be made, by detecting the movement of either the person P10 or the vacuum cleaner inside the target space 201 based on an image captured and generated by the camera of the image sensor, whether a given area is an uncleaned area or a cleaned area. Optionally, the lighting system 10c may light up a cleaned area with colored lighting light in a different color (e.g., color green) from the colored lighting light lighting up the uncleaned areas.

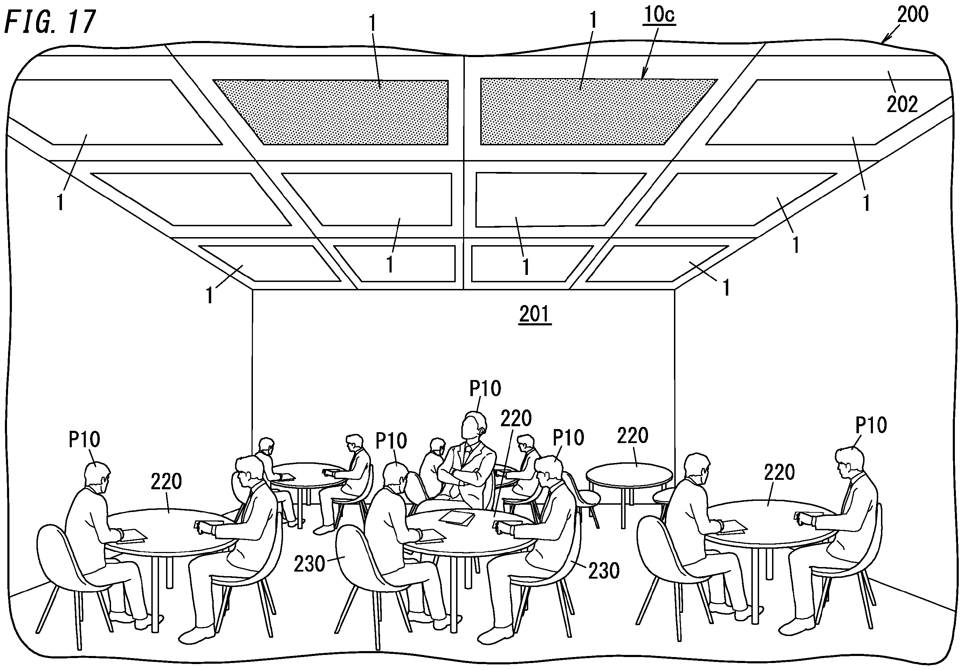

In the lighting system 10c, the event in question may also be, for example, an event that the number of people P10 staying in a unit area inside the facility 200 is greater than a predetermined number (e.g., two) as shown in FIG. 17. The control device 3c controls a particular lighting device 1 to give, upon acquiring information about the event in question, a sign, prompting the people P10 to reduce congestion, as the sign. The particular lighting device 1 belongs to the plurality of lighting devices 1 and is lighting up the unit area where the number of the people P10 staying is greater than the predetermined number. Thus, the lighting system 10c may prompt, using colored lighting light in a color different from the color white, the people P10 to reduce congestion. Thus, the lighting system 10c would contribute to lessening the risk of exposing the people P10 who are using the facility 200 to a virus of an infectious disease.

In the example illustrated in FIG. 17, in the facility 200, the number of people who are allowed to use each table 220 at a time is supposed to be a predetermined number (e.g., two). The image sensor controls two lighting devices 1, belonging to the plurality of lighting devices 1 and lighting up unit areas where the number of people P10 is greater than the predetermined number, to give, in response to acquisition of information about the event that the number of people who are using the same table 220 in a unit area is greater than the predetermined number, a sign prompting the people to reduce congestion.

In FIG. 17, the respective light emergent surfaces of the lighting devices 1 projecting colored lighting light, of which the color (e.g., color rust) is different from the color white, are indicated by the dotted hatch.

### (Variations)

Note that the first to fourth embodiments described above are only exemplary ones of various embodiments of the present disclosure and should not be construed as limiting. Rather, the first to fourth exemplary embodiments may be readily modified in various manners depending on a design choice or any other factor without departing from the scope of the present disclosure. For example, constituent elements of the first to fourth embodiments described above may be adopted in combination as appropriate.

For example, the lighting devices 1 do not have to be lighting devices installed on the ceiling 202 in the facility 200 but may also be, for example, lighting devices mounted on a wall surface or installed on the floor surface 203.

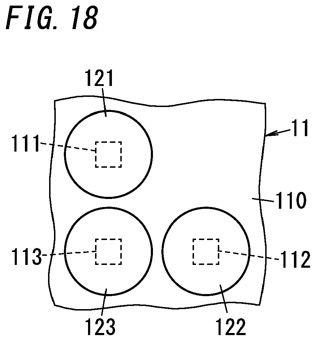

Alternatively, the light source 11 included in each of the plurality of lighting devices 1 may include, for example, a first blue LED 111, a second blue LED 112, a third blue LED 113, a first wavelength-converting portion 121, a second wavelength-converting portion 122, and a third wavelength-converting portion 123 as shown in FIG. 18. The first blue LED 111 emits first blue light. The second blue LED 112 emits second blue light. The third blue LED 113 emits third blue light. The first wavelength-converting portion 121 contains phosphor particles that radiate light, having a longer wavelength than the first blue light, when excited by the first blue light and emits light in a first intermediate color falling within a range from a color blue to the color white. The second wavelength-converting portion 122 contains phosphor particles that radiate light, having a longer wavelength than the second blue light, when excited by the second blue light and emits light in a second intermediate color falling within a range from a color green to the color white. The third wavelength-converting portion 123 contains phosphor particles that radiate light, having a longer wavelength than the third blue light, when excited by the third blue light and emits light in a third intermediate color falling within a range from a color red to the color white. The first, second, and third intermediate colors are mutually different colors. The first blue LED 111, the second blue LED 112, the third blue LED 113, the first wavelength-converting portion 121, the second wavelength-converting portion 122, and the third wavelength-converting portion 123 are mounted on the mount board 110. The light source 11 includes multiple sets, each consisting of the first blue LED 111, the second blue LED 112, the third blue LED 113, the first wavelength-converting portion 121, the second wavelength-converting portion 122, and the third wavelength-converting portion 123, on the single mount board 110. Each of the plurality of lighting devices 1 includes a driver circuit for driving a plurality of first blue LEDs 111, a driver circuit for driving a plurality of second blue LEDs 112, a driver circuit for driving a plurality of third blue LEDs 113, and a control circuit for controlling these driver circuits.

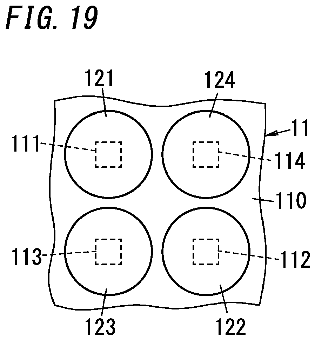

Still alternatively, the light source 11 included in each of the plurality of lighting devices 1 may include, for example, a first blue LED 111, a second blue LED 112, a third blue LED 113, a fourth blue LED 114, a first wavelength-converting portion 121, a second wavelength-converting portion 122, a third wavelength-converting portion 123, and a fourth wavelength-converting portion 124 as shown in FIG. 19. The first blue LED 111 emits first blue light. The second blue LED 112 emits second blue light. The third blue LED 113 emits third blue light. The fourth blue LED 114 emits fourth blue light. The first wavelength-converting portion 121 contains phosphor particles that radiate light, having a longer wavelength than the first blue light, when excited by the first blue light and emits light in a first intermediate color falling within a range from a color blue to the color white. The second wavelength-converting portion 122 contains phosphor particles that radiate light, having a longer wavelength than the second blue light, when excited by the second blue light and emits light in a second intermediate color falling within a range from a color green to the color white. The third wavelength-converting portion 123 contains phosphor particles that radiate light, having a longer wavelength than the third blue light, when excited by the third blue light and emits light in a third intermediate color falling within a range from a color red to the color white. The fourth wavelength-converting portion 124 contains phosphor particles that radiate light, having a longer wavelength than the fourth blue light, when excited by the fourth blue light and emits light in a fourth intermediate color falling within a range from a color different from any of the colors blue, green, and red, to the color white. The first, second, third, and fourth intermediate colors are mutually different colors. The first blue LED 111, the second blue LED 112, the third blue LED 113, the fourth blue LED 114, the first wavelength-converting portion 121, the second wavelength-converting portion 122, the third wavelength-converting portion 123, and the fourth wavelength-converting portion 124 are mounted on the mount board 110. The light source 11 includes multiple sets, each consisting of the first blue LED 111, the second blue LED 112, the third blue LED 113, the fourth blue LED 114, the first wavelength-converting portion 121, the second wavelength-converting portion 122, the third wavelength-converting portion 123, and the fourth wavelength-converting portion 124, on a single mount board 110. Each of the plurality of lighting devices 1 includes a driver circuit for driving a plurality of first blue LEDs 111, a driver circuit for driving a plurality of second blue LEDs 112, a driver circuit for driving a plurality of third blue LEDs 113, a driver circuit for driving a plurality of fourth blue LEDs 114, and a control circuit for controlling these driver circuits.

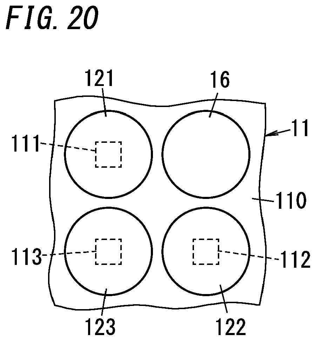

Yet alternatively, the light source 11 included in each of the plurality of lighting devices 1 may include, for example, a first blue LED 111, a second blue LED 112, a third blue LED 113, a first wavelength-converting portion 121, a second wavelength-converting portion 122, a third wavelength-converting portion 123, and a visible light LED 116 as shown in FIG. 20. The first blue LED 111 emits first blue light. The second blue LED 112 emits second blue light. The third blue LED 113 emits third blue light. The first wavelength-converting portion 121 contains phosphor particles that radiate light, having a longer wavelength than the first blue light, when excited by the first blue light and emits light in a first intermediate color falling within a range from a color blue to the color white. The second wavelength-converting portion 122 contains phosphor particles that radiate light, having a longer wavelength than the second blue light, when excited by the second blue light and emits light in a second intermediate color falling within a range from a color green to the color white. The third wavelength-converting portion 123 contains phosphor particles that radiate light, having a longer wavelength than the third blue light, when excited by the third blue light and emits light in a third intermediate color falling within a range from a color red to the color white. The visible light LED 116 emits visible light in a color different from any one of the color of the first blue light, the color of the second blue light, the color of the third blue light, the first intermediate color, the second intermediate color, the third intermediate color, or the color white. The first, second, and third intermediate colors are mutually different colors. The first blue LED 111, the second blue LED 112, the third blue LED 113, the visible light LED 116, the first wavelength-converting portion 121, the second wavelength-converting portion 122, and the third wavelength-converting portion 123 are mounted on a mount board 110. In addition, the light source 11 includes multiple sets, each consisting of the first blue LED 111, the second blue LED 112, the third blue LED 113, the visible light LED 116, the first wavelength-converting portion 121, the second wavelength-converting portion 122, and the third wavelength-converting portion 123, on the single mount board 110. Each of the plurality of lighting devices 1 includes a driver circuit for driving a plurality of first blue LEDs 111, a driver circuit for driving a plurality of second blue LEDs 112, a driver circuit for driving a plurality of third blue LEDs 113, a driver circuit for driving a plurality of visible light LEDs 116, and a control circuit for controlling these driver circuits.

Optionally, each of the lighting systems 10b, 10c may include the second lighting devices 2 of the lighting system 10a.

Also, in the lighting system 10, the control device 3 may also be configured to determine, based on BIM data of the facility 200, which of the plurality of lighting devices 1 should give the sign upon acquiring information about the event in question.

Alternatively, the control device 3c may also be configured to acquire information about the event in question from a sensor provided for the facility 200. In that case, the sensor may be, for example, a human presence sensor, or a receiver for receiving a wireless signal which is transmitted from a transmitter at regular intervals.

Optionally, the lighting device 1 may also be, for example, a down light or a spotlight. In the lighting system 10, the plurality of lighting devices 1 may include multiple types of lighting devices with mutually different light distribution properties. This allows the lighting system 10 to include a lighting device for providing lighting light as ambient lighting and a lighting device for providing lighting light as task lighting, thus providing task-ambient lighting.

Furthermore, the lighting device 1 may be configured to determine the orientation of the lighting light using a light source and a light guide member.

### (Aspects)

The first to fourth embodiments and their variations described above are specific implementations of the following aspects of the present disclosure.

A lighting system (10; 10a; 10b; 10c) according to a first aspect includes a plurality of lighting devices (1) and a control device (3). The plurality of lighting devices (1) are installed in a facility (200). The control device (3) controls the plurality of lighting devices (1). The control device (3) controls lighting light projected by at least one lighting device (1), belonging to the plurality of lighting devices (1), into colored lighting light, of which a color is different from a color white, to give, upon acquiring information about an event in question, a sign depending on the event in question.

The lighting system (10; 10a; 10b; 10c) according to the first aspect allows the lighting device (1) to be used for multiple purposes.

In a lighting system (10; 10a) according to a second aspect, which may be implemented in conjunction with the first aspect, the event in question is an event that necessitates giving guidance to a person (P10) staying in the facility (200). The control device (3) controls the at least one lighting device (1) to give, upon acquiring information about the event in question, a sign, indicating a direction (D10) to which the person (P10) staying in the facility (200) is to be guided, as the sign.

The lighting system (10; 10a) according to the second aspect may give, in response to occurrence of the event in question in the facility (200), a sign, indicating the direction (D10) to which the person (P10) staying in the facility (200) is to be guided, to him or her.

In a lighting system (10b) according to a third aspect, which may be implemented in conjunction with the first aspect, the event in question is an event that necessitates calling a person's (P10) attention to his or her direction of movement in the facility (200). The control device (3) controls the at least one lighting device (1) to give, upon acquiring information about the event in question, a sign, calling the person's (P10) attention to his or her direction of movement, as the sign.

The lighting system (10b) according to the third aspect may give, when the control device (3b) acquires, as information about the event in question, information about an event that necessitates calling the person's (P10) attention to his or her direction of movement in the facility (200), a sign calling the person's (P10) attention to his or her direction of movement using colored lighting light projected by the lighting device (1).

In a lighting system (10b) according to a fourth aspect, which may be implemented in conjunction with the first aspect, the event in question is an event that a first person (P11) is approaching, from a first direction (D1), an intersection between passages in the facility (200). The control device (3) controls a particular lighting device (1) to give, upon acquiring information about the event in question, a sign, telling a second person (P12) that the first person (P11) is approaching the intersection from the first direction (D1), as the sign. The second person (P12) is also approaching the intersection from a second direction (D2) different from the first direction (D1). The particular lighting device (1) belongs to the plurality of lighting devices (1) and is lighting up the intersection.

The lighting system (10b) according to the fourth aspect reduces the chances of a first person (P11) who is approaching an intersection from a first direction (D1) and a second person (P12) who is also approaching the intersection from a second direction (D2) colliding against each other when the two persons (P 11, P12) meet at the intersection.

In a lighting system (10b) according to a fifth aspect, which may be implemented in conjunction with the first aspect, the event in question is an event that a robot (Ro1) is moving in the facility (200). The control device (3b) controls the at least one lighting device (1) to give, upon acquiring information about the event in question, a sign, indicating a route that the robot (Ro1) is scheduled to follow in the facility (200), as the sign.

The lighting system (10b) according to the fifth aspect may call the attention of the person (P10) staying in the facility (200) to the presence of the robot (Ro1).

In a lighting system (10b) according to a sixth aspect, which may be implemented in conjunction with the first aspect, the event in question is an event that a person (P11) staying in the facility (200) is walking without looking ahead carefully. The control device (3b) controls the at least one lighting device (1) to give, upon acquiring information about the event in question, a sign, calling attention of either the person (P11) who is walking without looking ahead carefully or another person (P12) who is approaching the person (P11) walking without looking ahead carefully, as the sign.

The lighting system (10b) according to the sixth aspect may call, using colored lighting light in a color different from the color white, the attention of the person (P11) who is walking without looking ahead carefully and the attention of another person (P12) who is approaching the person (P11).

In a lighting system (10c) according to a seventh aspect, which may be implemented in conjunction with the first aspect, the event in question is an event that a person (P10) is moving inside the facility (200). The control device (3c) controls the at least one lighting device (1) to give, upon acquiring information about the event in question, a sign, indicating a flow line of the person (P10) who is moving inside the facility (200), as the sign.

The lighting system (10c) according to the seventh aspect may control the flow line of the person (P10) who is moving inside the facility (200).

In a lighting system (10c) according to an eighth aspect, which may be implemented in conjunction with the first aspect, the event in question is an event that a person (P10) is cleaning the facility (200). The control device (3c) controls a particular lighting device (1) to give, upon acquiring information about the event in question, a sign, indicating an uncleaned area (A3-A6) in the facility (200), as the sign. The particular lighting device (1) belongs to the plurality of lighting devices (1) and is lighting up the uncleaned area (A3-A6).

The lighting system (10c) according to the eighth aspect may make the uncleaned area (A3-A6) more easily recognizable for the person (P10) who is doing cleaning.

In a lighting system (10c) according to a ninth aspect, which may be implemented in conjunction with the first aspect, the event in question is an event that a numerical number of people staying in a unit area inside the facility (200) is greater than a predetermined number. The control device (3c) controls a particular lighting device (1) to give, upon acquiring information about the event in question, a sign, prompting the people (P10) to reduce congestion, as the sign. The particular lighting device belongs to the plurality of lighting devices (1) and is lighting up the unit area where the numerical number of the people staying is greater than the predetermined number.

The lighting system (10c) according to the ninth aspect may prompt, using colored lighting light in a color different from the color white, the person (P10) to reduce congestion. Thus, the lighting system (10c) would contribute to lessening the risk of exposing the people (P10) who are using the facility (200) to a virus of an infectious disease.

In lighting system (10; 10a; 10b; 10c) according to a tenth aspect, which may be implemented in conjunction with any one of the first to ninth aspects, each of the plurality of lighting devices (1) includes a light source (11) including: a blue LED (11B) that emits blue light; a green LED (11G) that emits green light; a red LED (11R) that emits red light; and a white LED (11W) that emits white light.

The lighting system (10; 10a; 10b; 10c) according to the tenth aspect increases the degree of freedom in the color of the colored lighting light.

In a lighting system (10; 10a; 10b; 10c) according to an eleventh aspect, which may be implemented in conjunction with any one of the first to ninth aspects, each of the plurality of lighting devices (1) includes a light source (11) including a first blue LED (111), a second blue LED (112), a first wavelength-converting portion (121), a second wavelength-converting portion (122), and a visible light LED (13, 14). The first blue LED (111) emits first blue light. The second blue LED (112) emits second blue light. The first wavelength-converting portion (121) contains green phosphor particles that radiate green light when excited by the first blue light. The second wavelength-converting portion (122) contains red phosphor particles that radiate red light when excited by the second blue light. The visible light LED (13, 14) emits visible light in a different color from any one of the first blue light, the second blue light, or white light.

The lighting system (10; 10a; 10b; 10c) according to the eleventh aspect improves, compared to the tenth aspect, the color rendering performance of the lighting light projected by a lighting device (1) when the lighting device (1) is used as main lighting.

In a lighting system (10; 10a; 10b; 10c) according to a twelfth aspect, which may be implemented in conjunction with any one of the first to ninth aspects, each of the plurality of lighting devices (1) includes a light source (11) including a first violet LED (131), a second violet LED (132), a third violet LED (133), a first wavelength-converting portion (141), a second wavelength-converting portion (142), and a third wavelength-converting portion (143). The first violet LED (131) emits first violet light. The second violet LED (132) emits second violet light. The third violet LED (133) emits third violet light. The first wavelength-converting portion (141) contains blue phosphor particles that radiate blue light when excited by the first violet light. The second wavelength-converting portion (142) contains green phosphor particles that radiate green light when excited by the second violet light. The third wavelength-converting portion (143) contains red phosphor particles that radiate red light when excited by the third violet light.

The lighting system (10; 10a; 10b; 10c) according to the twelfth aspect improves, compared to the tenth aspect, the color rendering performance of lighting light projected by a lighting device (1) when the lighting device (1) is used as main lighting.

In a lighting system (10; 10a; 10b; 10c) according to a thirteenth aspect, which may be implemented in conjunction with any one of the first to ninth aspects, each of the plurality of lighting devices (1) includes a light source (11) including a first blue LED (111), a second blue LED (112), a third blue LED (113), a first wavelength-converting portion (121), a second wavelength-converting portion (122), and a third wavelength-converting portion (123). The first blue LED (111) emits first blue light. The second blue LED (112) emits second blue light. The third blue LED (113) emits third blue light. The first wavelength-converting portion (121) contains phosphor particles that radiate light, having a longer wavelength than the first blue light, when excited by the first blue light and emits light in a first intermediate color falling within a range from a color blue to the color white. The second wavelength-converting portion (122) contains phosphor particles that radiate light, having a longer wavelength than the second blue light, when excited by the second blue light and emits light in a second intermediate color falling within a range from a color green to the color white. The third wavelength-converting portion (123) contains phosphor particles that radiate light, having a longer wavelength than the third blue light, when excited by the third blue light and emits light in a third intermediate color falling within a range from a color red to the color white.

The lighting system (10; 10a; 10b; 10c) according to the thirteenth aspect improves, compared to the tenth aspect, the color rendering performance of lighting light projected by a lighting device (1) when the lighting device (1) is used as main lighting.

In a lighting system (10; 10a; 10b; 10c) according to a fourteenth aspect, which may be implemented in conjunction with any one of the first to ninth aspects, each of the plurality of lighting devices (1) includes a light source (11) including a first blue LED (111), a second blue LED (112), a third blue LED (113), a fourth blue LED (114), a first wavelength-converting portion (121), a second wavelength-converting portion (122), a third wavelength-converting portion (123), and a fourth wavelength-converting portion (124). The first blue LED (111) emits first blue light. The second blue LED (112) emits second blue light. The third blue LED (113) emits third blue light. The fourth blue LED (114) emits fourth blue light. The first wavelength-converting portion (121) contains phosphor particles that radiate light, having a longer wavelength than the first blue light, when excited by the first blue light and emits light in a first intermediate color falling within a range from a color blue to the color white. The second wavelength-converting portion (122) contains phosphor particles that radiate light, having a longer wavelength than the second blue light, when excited by the second blue light and emits light in a second intermediate color falling within a range from a color green to the color white. The third wavelength-converting portion (123) contains phosphor particles that radiate light, having a longer wavelength than the third blue light, when excited by the third blue light and emits light in a third intermediate color falling within a range from a color red to the color white. The fourth wavelength-converting portion (124) contains phosphor particles that radiate light, having a longer wavelength than the fourth blue light, when excited by the fourth blue light and emits light in a fourth intermediate color falling within a range from a color different from any of the colors blue, green, and red, to the color white.

The lighting system (10; 10a; 10b; 10c) according to the fourteenth aspect improves, compared to the tenth aspect, the color rendering performance of lighting light projected by a lighting device (1) when the lighting device (1) is used as main lighting.

In a lighting system (10; 10a; 10b; 10c) according to a fifteenth aspect, which may be implemented in conjunction with any one of the first to ninth aspects, each of the plurality of lighting devices (1) includes a light source (11) including a first blue LED (111), a second blue LED (112), a third blue LED (113), a first wavelength-converting portion (121), a second wavelength-converting portion (122), a third wavelength-converting portion (123), and a visible light LED (16). The first blue LED (111) emits first blue light. The second blue LED (112) emits second blue light. The third blue LED (113) emits third blue light. The first wavelength-converting portion (121) contains phosphor particles that radiate light, having a longer wavelength than the first blue light, when excited by the first blue light and emits light in a first intermediate color falling within a range from a color blue to the color white. The second wavelength-converting portion (122) contains phosphor particles that radiate light, having a longer wavelength than the second blue light, when excited by the second blue light and emits light in a second intermediate color falling within a range from a color green to the color white. The third wavelength-converting portion (123) contains phosphor particles that radiate light, having a longer wavelength than the third blue light, when excited by the third blue light and emits light in a third intermediate color falling within a range from a color red to the color white. The visible light LED (16) emits visible light in a different color from any one of the first blue light, the second blue light, the third blue light, the light in the first intermediate color, the light in the second intermediate color, the light in the third intermediate color, or white light.

The lighting system (10; 10a; 10b; 10c) according to the fifteenth aspect improves, compared to the tenth aspect, the color rendering performance of lighting light projected by a lighting device (1) when the lighting device (1) is used as main lighting.

A lighting system (10; 10a; 10b; 10c) according to a sixteenth aspect, which may be implemented in conjunction with any one of the first to fifteenth aspects, further includes a plurality of second lighting devices (2) provided separately from a plurality of first lighting devices (1) and installed in the facility (200). The plurality of first lighting devices (1) serves as the plurality of the lighting devices (1). Lighting light projected by the plurality of second lighting devices (2) is white light having a correlated color temperature equal to or greater than 2700 K and equal to or less than 6000 K. The control device (3) controls the plurality of second lighting devices (2).

The lighting system (10; 10a; 10b; 10c) according to the sixteenth aspect allows the second lighting devices (2) to be used as main lighting.

A control method according to a seventeenth aspect is a method for controlling a plurality of lighting devices (1) installed in a facility (200). The control method includes controlling lighting light projected by at least one lighting device (1), belonging to the plurality of lighting devices (1), into colored lighting light, of which a color is different from a color white, to give, upon acquiring information about an event in question, a sign depending on the event in question.

The control method according to the seventeenth aspect allows the lighting device (1) to be used for multiple purposes.

A program according to an eighteenth aspect is designed to cause a computer system to perform the control method according to the seventeenth aspect.

The program according to the eighteenth aspect allows the lighting device (1) to be used for multiple purposes.

In a lighting system (10; 10a; 10b; 10c) according to a nineteenth aspect, which may be implemented in conjunction with any one of the first to ninth aspects,
each of the plurality of lighting devices (1) includes at least three selected from the group consisting of:
a blue LED that emits blue light;
a blue-green LED that emits blue-green light;
a green LED that emits green light;
a yellow LED that emits yellow light;
an orange LED that emits orange light;
a red LED that emits red light;
a blue light source including: the blue LED that emits the blue light; and a wavelength-converting portion containing phosphor particles that radiate light, having a longer wavelength than the blue light, when excited by the blue light and emitting light in an intermediate color falling within a range from a color blue to the color white;
a blue-green light source including: the blue LED that emits the blue light; and a wavelength-converting portion containing phosphor particles that radiate light, having a longer wavelength than the blue light, when excited by the blue light and emitting light in an intermediate color falling within a range from a color blue green to the color white;
a green light source including: the blue LED that emits the blue light; and a wavelength-converting portion containing phosphor particles that radiate light, having a longer wavelength than the blue light, when excited by the blue light and emitting light in an intermediate color falling within a range from a color green to the color white;
a yellow light source including: the blue LED that emits the blue light; and a wavelength-converting portion containing phosphor particles that radiate light, having a longer wavelength than the blue light, when excited by the blue light and emitting light in an intermediate color falling within a range from a color yellow to the color white;
an orange light source including: the blue LED that emits the blue light; and a wavelength-converting portion containing phosphor particles that radiate light, having a longer wavelength than the blue light, when excited by the blue light and emitting light in an intermediate color falling within a range from a color orange to the color white;
a red light source including: the blue LED that emits the blue light; and a wavelength-converting portion containing phosphor particles that radiate light, having a longer wavelength than the blue light, when excited by the blue light and emitting light in an intermediate color falling within a range from a color red to the color white;
another blue light source including: an LED that emits light having a shorter wavelength than violet light; and a wavelength-converting portion containing phosphor particles that radiate light, having a longer wavelength than the light having the shorter wavelength, when excited by the light having the shorter wavelength and emitting the light in the intermediate color falling within the range from the color blue to the color white;
another blue-green light source including: the LED that emits the light having the shorter wavelength than the violet light; and a wavelength-converting portion containing phosphor particles that radiate light, having a longer wavelength than the light having the shorter wavelength, when excited by the light having the shorter wavelength and emitting the light in the intermediate color falling within the range from the color blue-green to the color white;
another green light source including: the LED that emits the light having the shorter wavelength than the violet light; and a wavelength-converting portion containing phosphor particles that radiate light, having a longer wavelength than the light having the shorter wavelength, when excited by the light having the shorter wavelength and emitting the light in the intermediate color falling within the range from the color green to the color white;
another yellow light source including: the LED that emits the light having the shorter wavelength than the violet light; and a wavelength-converting portion containing phosphor particles that radiate light, having a longer wavelength than the light having the shorter wavelength, when excited by the light having the shorter wavelength and emitting the light in the intermediate color falling within the range from the color yellow to the color white;
another orange light source including: the LED that emits the light having the shorter wavelength than the violet light; and a wavelength-converting portion containing phosphor particles that radiate light, having a longer wavelength than the light having the shorter wavelength, when excited by the light having the shorter wavelength and emitting the light in the intermediate color falling within the range from the color orange to the color white; and
another red light source including: the LED that emits the light having the shorter wavelength than the violet light; and a wavelength-converting portion containing phosphor particles that radiate light, having a longer wavelength than the light having the shorter wavelength, when excited by the light having the shorter wavelength and emitting the light in the intermediate color falling within the range from the color red to the color white.

### Reference Signs List

- 1: Lighting Device (First Lighting Device)
- 2: Second Lighting Device
- 3: Control Device
- 11: Light Source
- 11R: Red LED
- 11G: Green LED
- 11B: Blue LED
- 11W: White LED
- 111: First Blue LED
- 112: Second Blue LED
- 113: Third Blue LED
- 114: Fourth Blue LED
- 13: Visible Light LED
- 14: Visible Light LED
- 121: First Wavelength-Converting Portion
- 122: Second Wavelength-Converting Portion
- 123: Third Wavelength-Converting Portion
- 124: Fourth Wavelength-Converting Portion
- 131: First Violet LED
- 132: Second Violet LED
- 133: Third Violet LED
- 141: First Wavelength-Converting Portion
- 142: Second Wavelength-Converting Portion
- 143: Third Wavelength-Converting Portion
- 15: Visible Light LED
- 16: Visible Light LED
- 10, 10a, 10b, 10c: Lighting System
- 200: Facility
- 201: Target Space
- D1: First Direction
- D2: Second Direction
- D 10: Direction of Guidance
- P10, P11, P12: Person (People)
- Ro1: Robot

## Claims

1. A lighting system comprising:
a plurality of lighting devices installed in a facility; and
a control device configured to control the plurality of lighting devices,
the control device being configured to control lighting light projected by at least one lighting device, belonging to the plurality of lighting devices, into colored lighting light, of which a color is different from a color white, to give, upon acquiring information about an event in question, a sign depending on the event in question.

2. The lighting system of claim 1, wherein
the event in question is an event that necessitates giving guidance to a person staying in the facility, and
the control device is configured to control the at least one lighting device to give, upon acquiring information about the event in question, a sign, indicating a direction to which the person staying in the facility is to be guided, as the sign.

3. The lighting system of claim 1, wherein
the event in question is an event that necessitates calling a person's attention to his or her direction of movement in the facility, and
the control device is configured to control the at least one lighting device to give, upon acquiring information about the event in question, a sign, calling the person's attention to his or her direction of movement, as the sign.

4. The lighting system of claim 1, wherein
the event in question is an event that a first person is approaching, from a first direction, an intersection between passages in the facility, and
the control device is configured to control a particular lighting device to give, upon acquiring information about the event in question, a sign, telling a second person that the first person is approaching the intersection from the first direction, as the sign, the second person also approaching the intersection from a second direction different from the first direction, the particular lighting device belonging to the plurality of lighting devices and lighting up the intersection.

5. The lighting system of claim 1, wherein
the event in question is an event that a robot is moving in the facility, and
the control device is configured to control the at least one lighting device to give, upon acquiring information about the event in question, a sign, indicating a route that the robot is scheduled to follow in the facility, as the sign.

6. The lighting system of claim 1, wherein
the event in question is an event that a person staying in the facility is walking without looking ahead carefully, and
the control device is configured to control the at least one lighting device to give, upon acquiring information about the event in question, a sign, calling attention of either the person who is walking without looking ahead carefully or another person who is approaching the person walking without looking ahead carefully, as the sign.

7. The lighting system of claim 1, wherein
the event in question is an event that a person is moving inside the facility, and
the control device is configured to control the at least one lighting device to give, upon acquiring information about the event in question, a sign, indicating a flow line of the person who is moving inside the facility, as the sign.

8. The lighting system of claim 1, wherein
the event in question is an event that a person is cleaning the facility, and
the control device is configured to control a particular lighting device to give, upon acquiring information about the event in question, a sign, indicating an uncleaned area in the facility, as the sign, the particular lighting device belonging to the plurality of lighting devices and lighting up the uncleaned area.

9. The lighting system of claim 1, wherein
the event in question is an event that a numerical number of people staying in a unit area inside the facility is greater than a predetermined number, and
the control device is configured to control a particular lighting device to give, upon acquiring information about the event in question, a sign, prompting the people to reduce congestion, as the sign, the particular lighting device belonging to the plurality of lighting devices and lighting up the unit area where the numerical number of the people staying is greater than the predetermined number.

10. The lighting system of any one of claims 1 to 9, wherein
each of the plurality of lighting devices includes a light source, the light source including:
a blue LED configured to emit blue light;
a green LED configured to emit green light;
a red LED configured to emit red light; and
a white LED configured to emit white light.

11. The lighting system of any one of claims 1 to 9, wherein
each of the plurality of lighting devices includes a light source, the light source including:
a first blue LED configured to emit first blue light;
a second blue LED configured to emit second blue light;
a first wavelength-converting portion containing green phosphor particles that radiate green light when excited by the first blue light;
a second wavelength-converting portion containing red phosphor particles that radiate red light when excited by the second blue light; and
a visible light LED configured to emit visible light in a different color from any one of the first blue light, the second blue light, or white light.

12. The lighting system of any one of claims 1 to 9, wherein
each of the plurality of lighting devices includes a light source, the light source including:
a first violet LED configured to emit first violet light;
a second violet LED configured to emit second violet light;
a third violet LED configured to emit third violet light;
a first wavelength-converting portion containing blue phosphor particles that radiate blue light when excited by the first violet light;
a second wavelength-converting portion containing green phosphor particles that radiate green light when excited by the second violet light; and
a third wavelength-converting portion containing red phosphor particles that radiate red light when excited by the third violet light.

13. The lighting system of any one of claims 1 to 9, wherein
each of the plurality of lighting devices includes a light source, the light source including:
a first blue LED configured to emit first blue light;
a second blue LED configured to emit second blue light;
a third blue LED configured to emit third blue light;
a first wavelength-converting portion containing phosphor particles that radiate light, having a longer wavelength than the first blue light, when excited by the first blue light and configured to emit light in a first intermediate color falling within a range from a color blue to the color white;
a second wavelength-converting portion containing phosphor particles that radiate light, having a longer wavelength than the second blue light, when excited by the second blue light and configured to emit light in a second intermediate color falling within a range from a color green to the color white; and
a third wavelength-converting portion containing phosphor particles that radiate light, having a longer wavelength than the third blue light, when excited by the third blue light and configured to emit light in a third intermediate color falling within a range from a color red to the color white.

14. The lighting system of any one of claims 1 to 9, wherein
each of the plurality of lighting devices includes a light source, the light source including:
a first blue LED configured to emit first blue light;
a second blue LED configured to emit second blue light;
a third blue LED configured to emit third blue light;
a fourth blue LED configured to emit fourth blue light;
a first wavelength-converting portion containing phosphor particles that radiate light, having a longer wavelength than the first blue light, when excited by the first blue light and configured to emit light in a first intermediate color falling within a range from a color blue to the color white;
a second wavelength-converting portion containing phosphor particles that radiate light, having a longer wavelength than the second blue light, when excited by the second blue light and configured to emit light in a second intermediate color falling within a range from a color green to the color white;
a third wavelength-converting portion containing phosphor particles that radiate light, having a longer wavelength than the third blue light, when excited by the third blue light and configured to emit light in a third intermediate color falling within a range from a color red to the color white; and
a fourth wavelength-converting portion containing phosphor particles that radiate light, having a longer wavelength than the fourth blue light, when excited by the fourth blue light and configured to emit light in a fourth intermediate color falling within a range from a color different from any of the colors blue, green, and red to the color white.

15. The lighting system of any one of claims 1 to 9, wherein
each of the plurality of lighting devices includes a light source, the light source including:
a first blue LED configured to emit first blue light;
a second blue LED configured to emit second blue light;
a third blue LED configured to emit third blue light;
a first wavelength-converting portion containing phosphor particles that radiate light, having a longer wavelength than the first blue light, when excited by the first blue light and configured to emit light in a first intermediate color falling within a range from a color blue to the color white;
a second wavelength-converting portion containing phosphor particles that radiate light, having a longer wavelength than the second blue light, when excited by the second blue light and configured to emit light in a second intermediate color falling within a range from a color green to the color white;
a third wavelength-converting portion containing phosphor particles that radiate light, having a longer wavelength than the third blue light, when excited by the third blue light and configured to emit light in a third intermediate color falling within a range from a color red to the color white; and
a visible light LED configured to emit visible light in a different color from any one of the first blue light, the second blue light, the third blue light, the light in the first intermediate color, the light in the second intermediate color, the light in the third intermediate color, or white light.

16. The lighting system of any one of claims 1 to 15, further comprising a plurality of second lighting devices provided separately from a plurality of first lighting devices and installed in the facility, the plurality of first lighting devices serving as the plurality of the lighting devices, wherein
lighting light projected by the plurality of second lighting devices is white light having a correlated color temperature equal to or greater than 2700 K and equal to or less than 6000 K, and
the control device is configured to control the plurality of second lighting devices.

17. A control method for controlling a plurality of lighting devices installed in a facility, the control method comprising:
controlling lighting light projected by at least one lighting device, belonging to the plurality of lighting devices, into colored lighting light, of which a color is different from a color white, to give, upon acquiring information about an event in question, a sign depending on the event in question.

18. A program designed to cause a computer system to perform the control method of claim 17.
